# EUROPÄISCHE PATENTSCHRIFT

(11) **EP 4 135 929 B1**
(45) Veröffentlichungstag und Bekanntmachung des Hinweises auf die Patenterteilung: **25.10.2023**
(21) Anmeldenummer: 21712415.5
(22) Anmeldetag: 24.02.2021
(51) Int. Cl.: B24B 55/02, B23Q 11/12, B23Q 11/14, B24B 5/35, B24B 5/06, B24B 5/18, F16L 19/00, F16L 15/00, F16L 37/244, F16L 37/252, F16L 37/113, B23Q 11/10

(54) **VORRICHTUNG UND VERFAHREN ZUM ANSCHLUSS EINER KÜHLDÜSE AN EINE KÜHLSCHMIERMITTELZUFÜHRUNG**
DEVICE AND METHOD FOR CONNECTING A COOLING NOZZLE TO A COOLING LUBRICANT SUPPLY
DISPOSITIF ET PROCÉDÉ POUR RACCORDER UNE BUSE DE REFROIDISSEMENT À UNE ALIMENTATION EN LUBRIFIANT DE REFROIDISSEMENT

(30) Priorität: 17.04.2020 DE 102020110477
(43) Veröffentlichungstag der Anmeldung: 22.02.2023
(73) Patentinhaber: Schaeffler Technologies AG & Co. KG, 91074 Herzogenaurach (DE)
(72) Erfinder: HOFMANN, Klaus, 91315 Höchstadt (DE); GANZMANN, Florian, 96913 Wachenroth (DE)
(86) Internationale Anmeldenummer: PCT/DE2021/100181
(87) Internationale Veröffentlichungsnummer: WO 2021/209085

(56) Entgegenhaltungen:
- US-A- 5 947 531
- US-A1- 2004 050 450
- US-A1- 2015 001 844
- US-A1- 2018 023 600

## Beschreibung

Die Erfindung betrifft eine Vorrichtung sowie ein Verfahren zum Anschluss einer Kühldüse an eine Kühlschmiermittelzuführung einer Schleifmaschine, insbesondere zum Innenrundschleifen.

Eine Vorrichtung zur Zuführung von Schmier- und Kühlflüssigkeit beim Schleifen von Werkstücken ist zum Beispiel in der DE 1 113 389 B beschrieben. Die Schmier- und Kühlflüssigkeit wird hierbei mit Hilfe einer Düse zugeführt, deren Breite am Austritt annähernd gleich der Schleifscheibenbreite ist. Nach der DE 1 113 389 B soll die Düse zwecks Erzeugung eines Drucks im Schleifspalt so angeordnet werden, dass der Flüssigkeitsstrahl genau auf die Schleifstelle gerichtet ist und die Düse im Schleifspalt so weit an die Schleifstelle heranreicht, dass durch den Umfang der Schleifscheibe und durch den Umfang des Werkstücks eine Verlängerung der Düse gegen die Schleifstelle entsteht.

Die DE 1 137 650 B offenbart ein Zusatzgerät zum Bohrungsschleifen. Hierbei ist zusätzlich zu einem pneumatischen Antrieb für die Werkzeugrotation ein Druckmittelantrieb für axiale Wechselbewegungen des Schleifaggregats vorgesehen.

Die EP 1 475 186 B1 offenbart eine Vorrichtung zum Rundschleifen, welche zusätzlich zu einer Schleifscheibe ein Hilfsabrasivwerkzeug umfasst, das um eine Hilfswerkzeugachse rotiert. Mit Hilfe dieser Vorrichtung sollen verschiedene Werkstückflächen bearbeitbar sein, zwischen welchen eine kreisförmige Übergangskante gebildet ist.

Die US 2018 / 023 600 A1 beschreibt eine Fluidzuführungsleitung für eine Vorrichtung zur Zuführung eines Fluids, insbesondere zur Zuführung einer Schneidflüssigkeit für eine Werkzeugmaschine, wie eine Schleifmaschine, Bohrmaschine oder Schneidmaschine.

Die US 2004 / 050 450 A offenbart eine kryogene Kupplungseinrichtung umfassend ein Gefäß und eine Düse, welche jeweils mit einem Ventil versehen sind. Die Düse ist vom Gefäß abnehmbar.

Die US 5 947 531 A beschreibt eine Verbinderanordnung zum Fördern von Fluiden mit einem Halteelement, an welchen ein Verriegelungsarm angebracht ist.

Die US 2015 / 001 844 A1 offenbart ein weibliches Schnellkupplungselement mit einem Entlastungsventil, einen Betätigungsring und einen Sicherheitsring.

Der Erfindung liegt die Aufgabe zugrunde, das Schleifen, insbesondere Innenrundschleifen, unter Verwendung von Kühlschmiermittel besonders rationell und prozesssicher zu gestalten.

Diese Aufgabe wird erfindungsgemäß gelöst durch eine einen Anschluss einer Kühldüse an eine Kühlschmiermittelzuführung einer Schleifmaschine geeignete Vorrichtung mit den Merkmalen des Anspruchs 1. Ebenso wird die Aufgabe gelöst durch ein Verfahren zum Anschluss einer Kühldüse gemäß Anspruch 9. Im Folgenden im Zusammenhang mit dem Anschlussverfahren erläuterte Ausgestaltungen und Vorteile der Erfindung gelten sinngemäß auch für die Anschlussvorrichtung und umgekehrt.

Die zur Verwendung bei einer Schleifmaschine, insbesondere zum Innenrundschleifen, geeignete Anschlussvorrichtung umfasst ein Rotativ-Linear-Getriebe, welches ein um eine Mittelachse schwenkbares Antriebselement, das mit einem Handhebel verbunden ist, aufweist. Das Rotativ-Linear-Getriebe weist ferner ein längs der genannten Mittelachse in einem Gehäuse verdrehgesichert verschiebbares Rohrstück als Abtriebselement auf. Durch das Gehäuse ist eine Aufnahme für eine Kühldüse gebildet, an welche das Rohrstück mittels des Rotativ-Linear-Getriebes anpressbar ist.

Die Erfindung geht von der Überlegung aus, dass eine Kühldüse zur Zuführung von Kühlschmiermittel an die Schleifstelle einer Schleifmaschine während des Rüstvorgangs eingestellt werden muss. Der für diesen Vorgang benötigte Zeitraum steht für eigentliche Schleifbearbeitung nicht zur Verfügung.

Die anmeldungsgemäße Anschlussvorrichtung bietet nicht nur die Möglichkeit, einen schnellen Wechsel einer Kühldüse vorzunehmen, sondern eignet sich auch für die präzise Positionierung einer bereits voreingestellten Kühldüse in der Anschlussvorrichtung. Zeiträume, in welchen die Schleifmaschine, insbesondere Innenrundschleifmaschine, nicht für die Schleifbearbeitung zur Verfügung steht, sind damit minimiert.

Das Rotativ-Linear-Getriebe, mit welchem das zur Durchleitung von Kühlschmiermittel vorgesehene Rohrstück innerhalb der Anschlussvorrichtung verschoben wird, ohne es zu verdrehen, kann als selbsthemmendes Getriebe ausgelegt sein. Dies bedeutet, dass der Handhebel nicht von der Ausgangsseite des Getriebes aus, das heißt durch eine in Längsrichtung auf das Rohrstück wirkende Kraft, ausgelenkt werden kann.

Insbesondere bedeutet dies, dass das Rohrstück, sobald es die Kühldüse festklemmt, indem es an diese angepresst ist, ohne weitere Fixierungsmittel, etwa in Form einer Klemmschraube, in dieser Position verbleibt. Es ist somit eine einzige Handbewegung ausreichend, um eine fluidtechnische Verbindung zwischen dem Rohrstück und der Kühldüse herzustellen und zugleich die Kühldüse in der Anschlussvorrichtung zu fixieren. Voraussetzung für diesen Anschlussvorgang ist lediglich das Einschieben der Kühldüse in die Aufnahme des Gehäuses, was ebenfalls mit einem einzigen Handgriff machbar ist.

Das Rotativ-Linear-Getriebe ist dazu ausgebildet, eine Rotationsbewegung des Antriebselementes - egal in welche Drehrichtung - in definierter Weise eine Längsbewegung des Abtriebselementes umzusetzen. Es ist somit sowohl bei einer Verlagerung des Abtriebselementes in einer ersten Axialrichtung, das heißt Längsrichtung des Abtriebselementes, als auch bei einer Verschiebung des Abtriebselementes in der entgegengesetzten Axialrichtung eine eindeutige Zuordnung zwischen der Winkelstellung des Antriebselementes und der Position des Abtriebselementes gegeben. Damit ist eine ausschließlich durch das Antriebselement gesteuerte lineare Zwangsführung des Abtriebselementes in beiden Axialrichtungen realisiert.

Allgemein wird die Kühldüse an die Kühlschmiermittelzuführung angeschlossen, indem die Kühldüse an einer Aufnahme eines ortsfesten Gehäuses abgestützt sowie gegen Verdrehung gesichert wird und anschließend ein zur Durchleitung von Kühlschmiermittel vorgesehenes, im Gehäuse linear geführtes und gegen Verdrehung gesichertes Rohrstück mit Hilfe eines per Hand betätigten, im Gehäuse angeordneten Rotativ-Linear-Getriebes an die Kühldüse angedrückt wird.

Gemäß einer möglichen Verfahrensführung wird die Kühldüse in voreingestellter Konfiguration an das fest mit der Schleifmaschine verbundene Gehäuse angebaut, wobei das Rotativ-Linear-Getriebe mit Hilfe eines um weniger als 180° schwenkbaren, fest mit einem Antriebselement des Rotativ-Linear-Getriebes verbunden Handhebels betätigt wird, und wobei der Handhebel während des Betriebs der Schleifmaschine einschließlich der Zuleitung von Kühlschmiermittel mit dem Antriebselement verbunden bleibt. Das Antriebselement behält hierbei ausschließlich durch Reibschluss, nämlich durch selbsthemmende Auslegung des Rotativ-Linear-Getriebes, seine Position bei.

Zum Anschließen der Kühldüse sowie zum Lösen der Verbindung zwischen der Anschlussvorrichtung und der Kühldüse ist somit eine Schwenkbewegung des Handhebels ausreichend, welche ohne Umgreifen durchführbar ist. Das Antriebselement des Rotativ-Linear-Getriebes kann dementsprechend eine Gewindestruktur aufweisen, welche sich über deutlich weniger als eine volle Umdrehung, insbesondere über weniger als eine halbe Umdrehung, erstreckt. Beispielsweise ist die Gewindestruktur als mehrgängiges Gewinde ausgebildet, wobei sich jeder Gewindegang über weniger als 180° erstreckt.

Eine mehrgängige Gewindestruktur kann beispielsweise durch schraubenförmig gewundene Kulissen gebildet sein, in die jeweils ein fest mit dem Rohrstück verbundener und zugleich im Gehäuse in Umfangsrichtung des Rohrstücks abgestützter Führungsstift eingreift. Die Führungsstifte haben damit eine Doppelfunktion, nämlich zum einen eine Funktion als Elemente eines Gewindemechanismus und zum anderen in Zusammenwirkung mit dem Gehäuse eine Funktion zur Verdrehsicherung.

Die durch die Anschlussvorrichtung gebildete Aufnahme für die Kühldüse kann zwei die Kühldüse seitlich umgreifende Führungsbacken aufweisen, welche eine Verschiebung der Kühldüse ausschließlich orthogonal zur Mittelachse des Rohrstücks ermöglichen. Die Kühldüse, welche an der Anschlussvorrichtung zu befestigen ist, kann ein- oder mehrteilig aufgebaut sein. In beiden Fällen ragt typischerweise der größte Teil der an der Anschlussvorrichtung befestigten Kühldüse aus der Anschlussvorrichtung heraus. Hinsichtlich des Werkstoffs, aus welchem die Kühldüse gefertigt ist, existieren keine prinzipiellen Einschränkungen. Auch eine Fertigung der Kühldüse aus einem Mix verschiedener Materialien, beispielsweise Kunststoff und Metall, ist möglich.

Um ein korrektes Positionieren der Kühldüse an der Anschlussvorrichtung zu unterstützen, kann an mindestens einem der Führungsbacken ein die Verschiebung der Kühldüsen begrenzender Anschlag angeordnet sein. Alternativ kann ein solcher Anschlag an einem Gehäuseabschnitt der Anschlagvorrichtung zwischen den Führungsbacken angebracht sein. Zusätzlich zu einem Anschlag kann die Anschlussvorrichtung eine die Kühldüse in ihrer Anschlagposition fixierende Einrastvorrichtung aufweisen. Eine solche Einrastvorrichtung umfasst beispielsweise ein im Gehäuse der Anschlussvorrichtung federnd gelagertes Element, welches in eine Rastkontur auf der Seite der Kühldüse einrasten kann.

Nachfolgend werden zwei Ausführungsbeispiele der Erfindung anhand einer Zeichnung näher erläutert. Hierin zeigen:
- Fig. 1: ein erstes Ausführungsbeispiel einer Anschlussvorrichtung für eine Kühldüse einer Schleifmaschine in perspektivischer Ansicht,
- Fig. 2: die Anschlussvorrichtung nach Figur 1 in geschnittener perspektivischer Ansicht,
- Fig. 3: ein Detail der Anschlussvorrichtung nach Figur 1,
- Fig. 4: ein Antriebselement der Anschlussvorrichtung nach Figur 1,
- Fig. 5: ein zweites Ausführungsbeispiel einer Anschlussvorrichtung samt Kühldüse in schematisierter Schnittdarstellung.

Die folgenden Erläuterungen beziehen sich, soweit nicht anders angegeben, auf beide Ausführungsbeispiele. Einander entsprechende oder prinzipiell gleichwirkende Teile sind in allen Figuren mit den gleichen Bezugszeichen gekennzeichnet.

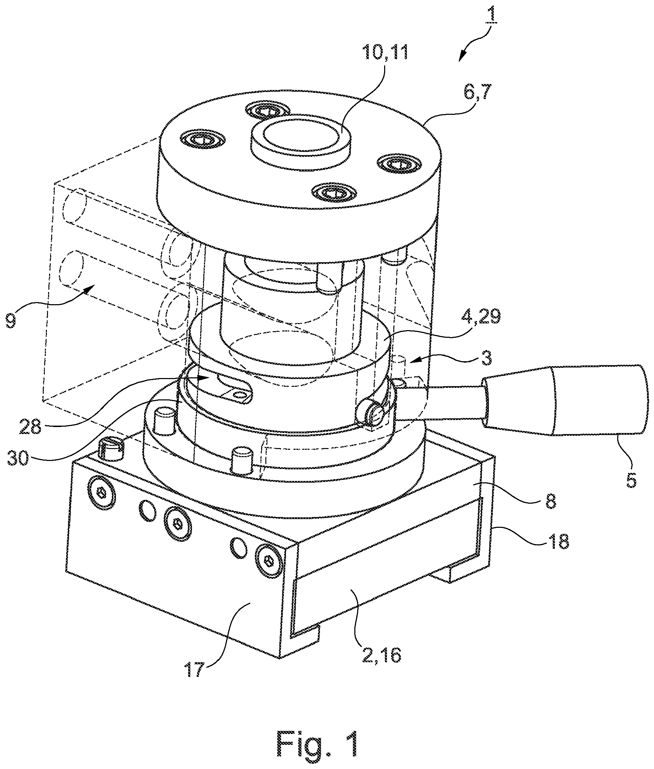

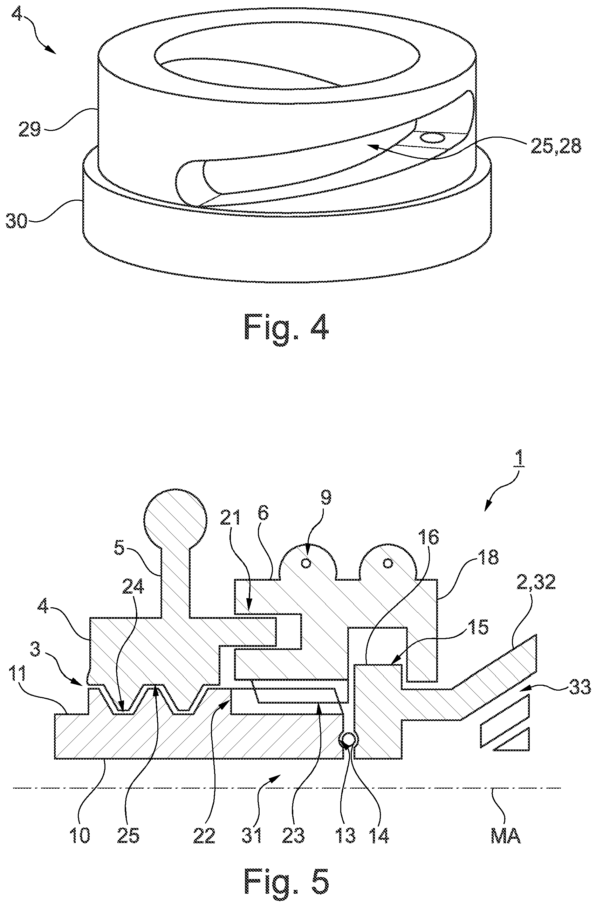

Eine insgesamt mit dem Bezugszeichen 1 gekennzeichnete Vorrichtung ist zum Anschluss einer Kühldüse 2 an eine Kühlschmiermittelzuführung einer Schleifmaschine, nämlich Innenrundschleifmaschine, vorgesehen. Teil der Anschlussvorrichtung 1 ist ein Rotativ-Linear-Getriebe 3, das heißt ein Getriebe, welches eine Rotation in eine lineare Bewegung umsetzt. Als beschränkt drehbares Antriebselement 4 des Rotativ-Linear-Getriebes 3 ist im Ausführungsbeispiel nach Figur 1 ein Kulissenring und im Ausführungsbeispiel nach Figur 5 eine Spindelmutter vorgesehen. In jedem Fall ist ein um die mit MA bezeichnete Mittelachse der Anschlussvorrichtung 1 schwenkbarer Handhebel 5, das heißt Schwenkhebel, fest mit dem Antriebselement 4 verbunden. Das Antriebselement 4 selbst weist die Grundform eines Rings auf, der konzentrisch zur Mittelachse MA angeordnet ist.

Das Antriebselement 4 ist drehbar in einem Gehäuse 6 der Anschlussvorrichtung 1 gelagert. Ein Gehäusedeckel ist mit 7, ein Gehäuseboden mit 8 bezeichnet. Mit 9 sind Befestigungskonturen des Gehäuses 6 bezeichnet. Das Gehäuse 6 ist starr mit der tragenden Struktur der Schleifmaschine verbunden.

Ein Rohrstück 10, welches sich zentrisch im Gehäuse 6 befindet, ist zur Durchleitung von Kühlschmiermittel beim Betrieb der Schleifmaschine vorgesehen. An einem aus dem Gehäuse 6 herausragenden Anschlussabschnitt 11 des Rohrstücks 10 ist ein Schlauch anschließbar, durch welchen Kühlschmiermittel zugeführt wird. Die dem Anschlussabschnitt 11 gegenüberliegende Stirnfläche des Rohrstücks 10 ist als düsenseitige Stirnfläche 12 bezeichnet. In der düsenseitigen Stirnfläche 12 befindet sich eine Nut 13, die sich zum Einlegen einer Dichtung 14 eignet. Mit Hilfe der Dichtung 14 wird eine flüssigkeitsdichte Abdichtung zwischen dem Rohrstück 10 und der Kühldüse 2 hergestellt. Die Dichtung 14 kontaktiert hierbei eine Grundplatte 16 der Kühldüse 2, wobei die Grundplatte 16 in einer Aufnahme 15 der Anschlussvorrichtung 1 aufgenommen ist. Im Übrigen ragt die Kühldüse 2 aus der Anschlussvorrichtung 1 heraus.

Ein durch das Rohrstück 10 gebildeter Kühlschmiermittelkanal 31 setzt sich in die Kühldüse 2 hinein fort, wo er sich in einem Verteilungsabschnitt 32 in Einzelkanäle 33 aufspaltet. Der Verteilungsabschnitt 32 kann, wie in Figur 5 angedeutet, einstückig mit der übrigen Kühldüse 2 einschließlich der Grundplatte 16 verbunden sein. Abweichend hiervon ist im Ausführungsbeispiel nach Figur 1, in welcher lediglich die Grundplatte 16 der Kühldüse 2 sichtbar ist, ein mehrteiliger Aufbau der Kühldüse 2 gegeben.

Für den Betrieb der Schleifmaschine ist die Kühldüse 2 an die örtlichen Gegebenheiten anzupassen oder aus einer Mehrzahl verfügbarer Kühldüsen 2 auszuwählen. In jedem Fall ist ein rascher Wechsel der Kühldüse 2 ohne Einstellarbeiten bei an der Schleifmaschine installierter Kühldüse 2 unter dem Gesichtspunkt einer bestmöglichen Ausnutzung der Schleifmaschine, das heißt einer Maximierung der Maschinennutzungszeit, von Vorteil. Diesem Ziel wird entsprochen, indem die Grundplatte 16 der Kühldüse 2 auf einfache Weise in die Aufnahme 15 der Anschlussvorrichtung 1 einschiebbar ist und einen Anschluss der Kühldüse 2 an die Kühlschmiermittelversorgung ermöglicht.

Die Aufnahme 15 umfasst zwei Führungsbacken 17, 18, welche dem Gehäuse 6 zuzurechnen sind. Die vollständig in die Aufnahme 15 eingeschobene Grundplatte 16 liegt an einem Anschlagelement 19 an, das in den Ausführungsbeispielen durch eine Führungsbacke 17, 18 bereitgestellt wird oder direkt durch die Führungsbacke 17, 18 gebildet ist. In der Anschlagposition der Grundplatte 16 rastet eine Einrastvorrichtung 20, welche sich am Gehäuseboden 8 befindet, in eine korrespondierend geformte Gegenkontur der Grundplatte 16 ein.

Zur drehbaren, jedoch nicht verschiebbaren Lagerung des Antriebselements 4 ist eine rotative Lagerung 21 im Gehäuse 6 vorgesehen. Im Gegensatz zum Antriebselement 4 ist das Rohrstück 10, welches auch als Druckkopf bezeichnet wird und das Abtriebselement des Rotativ-Linear-Getriebes 3 darstellt, mit Hilfe einer linearen Lagerung 22 ausschließlich verschiebbar im Gehäuse 6 gelagert. Eine durch das Gehäuse 6 gebildete Verdrehsicherungskontur, welche jede Verdrehung des Rohrstücks 10 um seine eigene Achse, das heißt um die Mittelachse MA, unterbindet, ist mit 23 bezeichnet. Ausschließlich im Ausführungsbeispiel nach Figur 5 weist das Rohrstück 10 ein Außengewinde 24 auf, welches direkt mit einer Gewindestruktur 25 des Antriebselements 4 zusammenwirkt.

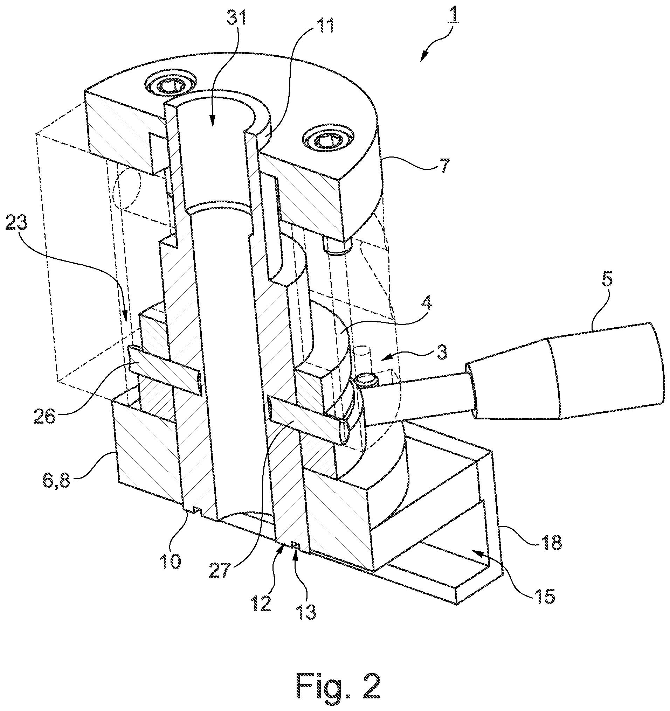

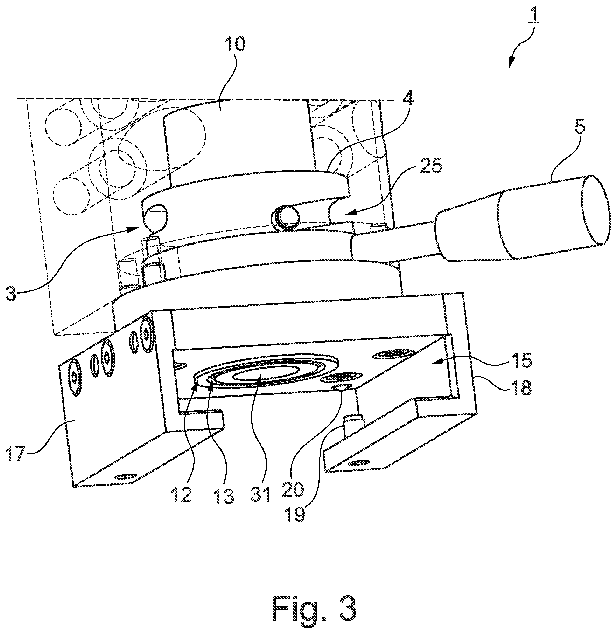

Im Ausführungsbeispiel nach den Figuren 1 bis 4 ist die Gewindestruktur 25 verkörpert durch Kulissen 28, welche sich im Antriebselement 4 befinden. Hierbei stellen zwei sich diametral gegenüberliegende Kulissen 28 jeweils einen Abschnitt eines Gewindegangs dar. Die Gewindestruktur 25 des Antriebselementes 4 nach Figur 4 ist damit als zweigängiges Gewinde ausgebildet.

Die Funktion des Außengewindes 24 im Ausführungsbeispiel nach Figur 5 wird im Ausführungsbeispiel nach Figur 1 durch zwei Führungsstifte 26, 27 übernommen, welche in das Rohrstück 10 eingesteckt sind und in die Kulissen 28 des Antriebselements 4 eingreifen, wobei die Führungsstifte 26, 27 zugleich als mit der Verdrehsicherungskontur 23 des Gehäuses 6 zusammenwirkende Verdrehsicherungselemente fungieren. Die Kulissen 28 befinden sich, wie aus Figur 4 hervorgeht, in einem dünnwandigen Abschnitt 29 des Antriebselements 4. Ein im Vergleich hierzu dickwandigerer Fußabschnitt 30 des Antriebselements 4 liegt in diesem Fall auf dem Gehäuseboden 8 auf.

In beiden Ausführungsbeispielen kann durch eine Verschwenkung des Handhebels 5 um deutlich weniger als 180° das Rohrstück 10 wahlweise an die Grundplatte 16 der Kühldüse 2 angepresst oder soweit von der Grundplatte 16 abgehoben werden, dass die Kühldüse 2 mit einem einzigen Handgriff aus der Aufnahme 15 entnehmbar ist. Mittel zur Blockierung des Handhebels 5 in irgendeiner Stellung sind nicht vorgesehen. Das Rotativ-Linear-Getriebe 3 ist als selbsthemmendes Getriebe ausgebildet, sodass insbesondere bei in die Anschlussvorrichtung 1 eingesetzter Kühldüse 2 der Handhebel 5 in seiner eingestellten Position, in welcher eine flüssigkeitsdichte Verbindung zwischen der Anschlussvorrichtung 1 und der Kühldüse 2 hergestellt ist, verbleibt. Dies gilt auch unter Schwingungsbelastungen, welche beim Betrieb der Schleifmaschine, die über die Anschlussvorrichtung 1 mit Kühlschmiermittel versorgt wird, auftreten.

### Bezugszeichenliste

- 1: Anschlussvorrichtung
- 2: Kühldüse
- 3: Rotativ-Linear-Getriebe
- 4: Antriebselement, Kulissenring
- 5: Handhebel
- 6: Gehäuse
- 7: Gehäusedeckel
- 8: Gehäuseboden
- 9: Befestigungskontur des Gehäuses
- 10: Rohrstück, Druckkopf
- 11: Anschlussabschnitt des Rohrstücks
- 12: düsenseitige Stirnfläche des Rohrstücks
- 13: Nut
- 14: Dichtung
- 15: Aufnahme für die Kühldüse
- 16: Grundplatte der Kühldüse
- 17: Führungsbacke
- 18: Führungsbacke
- 19: Anschlagelement
- 20: Einrastvorrichtung
- 21: rotative Lagerung des Antriebselements
- 22: lineare Lagerung des Rohrstücks
- 23: Verdrehsicherungskontur des Gehäuses
- 24: Außengewinde des Rohrstücks
- 25: Gewindestruktur des Antriebselements
- 26: Führungsstift
- 27: Führungsstift
- 28: Kulisse, Gewindegang
- 29: dünnwandiger Abschnitt des Antriebselements
- 30: Fußabschnitt des Antriebselements
- 31: Kühlschmiermittelkanal
- 32: Verteilungsabschnitt der Kühldüse
- 33: Einzelkanal

- MA: Mittelachse

## Patentansprüche

1. Vorrichtung zum Anschluss einer Kühldüse an eine Kühlschmiermittelzuführung für eine Schleifmaschine, **dadurch gekennzeichnet, dass** diese
- ein Rotativ-Linear-Getriebe (3), welches ein um eine Mittelachse (MA) schwenkbares Antriebselement (4), das mit einem Handhebel (5) verbunden ist, sowie ein längs der Mittelachse (MA) in einem Gehäuse (6) verdrehgesichert verschiebbares Rohrstück (10) als Abtriebselement umfasst,
- eine durch das Gehäuse (6) gebildete Aufnahme (15) für eine Kühldüse (2) umfasst, an welche das Rohrstück (10) mittels des Rotativ-Linear-Getriebes (3) anpressbar ist.

2. Vorrichtung nach Anspruch 1, **dadurch gekennzeichnet, dass** das Rotativ-Linear-Getriebe (3) als selbsthemmendes Getriebe ausgebildet ist.

3. Vorrichtung nach Anspruch 1 oder 2, **dadurch gekennzeichnet, dass** das Antriebselement (4) des Rotativ-Linear-Getriebes (3) eine Gewindestruktur (25), welche sich über weniger als eine volle Umdrehung erstreckt, aufweist.

4. Vorrichtung nach Anspruch 3, **dadurch gekennzeichnet, dass** die Gewindestruktur (25) als mehrgängiges Gewinde ausgebildet ist, wobei sich jeder Gewindegang (28) über weniger als 180° erstreckt.

5. Vorrichtung nach Anspruch 4, **dadurch gekennzeichnet, dass** die Gewindestruktur (25) des Antriebselementes (4) durch schraubenförmig gewundene Kulissen (28) gebildet ist, in die jeweils ein fest mit dem Rohrstück (10) verbundener und zugleich im Gehäuse (6) in Umfangsrichtung des Rohrstücks (10) abgestützter Führungsstift (26, 27) eingreift.

6. Vorrichtung nach einem der Ansprüche 1 bis 5, **dadurch gekennzeichnet, dass** die Aufnahme (15) für die Kühldüse (2) zwei die Kühldüse (2) seitlich umgreifende Führungsbacken (17, 18) aufweist, welche eine Verschiebung der Kühldüse (2) ausschließlich orthogonal zur Mittelachse (MA) ermöglichen.

7. Vorrichtung nach Anspruch 6, **dadurch gekennzeichnet, dass** zumindest an einer der Führungsbacken (17, 18) ein die Verschiebung der Kühldüse (2) begrenzendes Anschlagelement (19) angebracht ist.

8. Vorrichtung nach Anspruch 7, **dadurch gekennzeichnet, dass** die Aufnahme (15) für die Kühldüse (2) eine die Kühldüse (2) in Anschlagposition fixierende Einrastvorrichtung (20) aufweist.

9. Verfahren zum Anschluss einer Kühldüse (2) an eine Kühlschmiermittelzuführung einer Schleifmaschine, wobei die Kühldüse (2) an einer Aufnahme (15) eines ortsfesten Gehäuses (6) abgestützt sowie gegen Verdrehung gesichert wird und anschließend ein zur Durchleitung von Kühlschmiermittel vorgesehenes, im Gehäuse (6) linear geführtes und gegen Verdrehung gesichertes Rohrstück (10) mit Hilfe eines per Hand betätigten, im Gehäuse (6) angeordneten Rotativ-Linear-Getriebes (3) an die Kühldüse (2) angedrückt wird.

10. Verfahren nach Anspruch 9, **dadurch gekennzeichnet, dass** die Kühldüse (2) in voreingestellter Konfiguration an das fest mit der Schleifmaschine verbundene Gehäuse (6) angebaut wird, wobei das Rotativ-Linear-Getriebe (3) mit Hilfe eines um weniger als 180° schwenkbaren, fest mit einem Antriebselement (4) des Rotativ-Linear-Getriebes (3) verbunden Handhebels (5) betätigt wird, und wobei der Handhebel (5) während des Betriebs der Schleifmaschine einschließlich der Zuleitung von Kühlschmiermittel mit dem Antriebselement (4) verbunden bleibt, welches hierbei ausschließlich durch Reibschluss, nämlich durch selbsthemmende Auslegung des Rotativ-Linear-Getriebes (3), eine konstante Position beibehält.

## Claims

1. A device for connecting a cooling nozzle to a cooling lubricant supply for a grinding machine, **characterised in that** it comprises
- a rotary-linear transmission (3), that comprises a drive element (4) which can pivot about a central axis (MA) and which is connected to a manual lever (5), and a tube section (10) as an output element that can be moved along the central axis (MA) and is secured against rotation in a housing (6); and
- a receiving means (15), formed by the housing (6), for a cooling nozzle (2), onto which the tube section (10) can be pressed by means of the rotary-linear transmission (3).

2. The device according to claim 1, **characterised in that** the rotary-linear transmission (3) is designed as a self-locking transmission.

3. The device according to claim 1 or 2, **characterised in that** the drive element (4) of the rotary-linear transmission (3) has a thread structure (25), which extends over less than one full revolution.

4. The device according to claim 3, **characterised in that** the thread structure (25) is designed as a multiple thread, wherein each thread (28) extends over less than 180°.

5. The device according to claim 4, **characterised in that** the thread structure (25) of the drive element (4) is formed by helically wound links (28), in each of which a guide pin (26, 27) engages, which is securely connected to the tube section (10) and is simultaneously supported in the housing (6) in the circumferential direction of the tube section (10).

6. The device according to one of claims 1 to 5, **characterised in that** the receiving means (15) for the cooling nozzle (2) has two guide jaws (17, 18) laterally encompassing the cooling nozzle (2), which enable the cooling nozzle (2) to move exclusively orthogonally to the central axis (MA).

7. The device according to claim 6, **characterised in that** a stop element (19) limiting the movement of the cooling nozzle (2) is applied on at least one of the guide jaws (17, 18).

8. The device according to claim 7, **characterised in that** the receiving means (15) for the cooling nozzle (2) has a locking device (20) that fixes the cooling nozzle (2) in the stop position.

9. A method for connecting a cooling nozzle (2) to a cooling lubricant supply of a grinding machine, wherein the cooling nozzle (2) is supported on a receiving means (15) of a stationary housing (6) and secured against rotation, and then a tube section (10) for the passage of cooling lubricant, guided linearly in the housing (6) and secured against rotation, is pressed against the cooling nozzle (2) with the aid of a manually actuated rotary-linear transmission (3) arranged in the housing (6).

10. The method according to claim 9, **characterised in that** the cooling nozzle (2) is installed in a preset configuration on the housing (6) that is securely connected to the grinding machine, wherein the rotary-linear transmission (3) is actuated with the aid of a hand lever (5) which can be pivoted by less than 180° and is securely connected to a drive element (4) of the rotary-linear transmission (3), and wherein the hand lever (5) remains connected to the drive element (4) during operation of the grinding machine, including the supply of cooling lubricant, which in this way maintains a constant position exclusively through frictional engagement, namely through the self-locking design of the rotary-linear transmission (3).

## Revendications

1. Dispositif pour raccorder une buse de refroidissement à une alimentation en lubrifiant de refroidissement pour une rectifieuse, **caractérisé en ce qu'**il comprend :
- une transmission rotative-linéaire (3), laquelle comprend un élément d'entraînement (4) pivotant autour d'un axe central (MA), lequel est relié à un levier à main (5), ainsi qu'une pièce tubulaire (10), mobile de manière bloquée en rotation le long de l'axe central (MA) dans un boîtier (6), en tant qu'élément de sortie,
- un logement (15) formé par le boîtier (6) pour une buse de refroidissement (2), contre lequel la pièce tubulaire (10) peut être pressée au moyen de la transmission rotative-linéaire (3).

2. Dispositif selon la revendication 1, **caractérisé en ce que** la transmission rotative-linéaire (3) est conçue sous forme de transmission autobloquante.

3. Dispositif selon la revendication 1 ou 2, **caractérisé en ce que** l'élément d'entraînement (4) de la transmission rotative-linéaire (3) comporte une structure filetée (25), laquelle s'étend sur moins d'un tour complet.

4. Dispositif selon la revendication 3, **caractérisé en ce que** la structure filetée (25) est conçue sous forme de filetage multifilet, dans lequel chaque filet (28) s'étend sur moins de 180 °.

5. Dispositif selon la revendication 4, **caractérisé en ce que** la structure filetée (25) de l'élément d'entraînement (4) est formée par des coulisses (28) enroulées hélicoïdales, dans lesquelles vient respectivement en prise une tige de guidage (26, 27) solidaire à la pièce tubulaire (10) et prenant en même temps appui sur le boîtier (6) dans la direction périphérique de la pièce tubulaire (10).

6. Dispositif selon l'une quelconque des revendications 1 à 5, **caractérisé en ce que** le logement (15) pour la buse de refroidissement (2) comporte deux mâchoires de guidage (17, 18) entourant latéralement la buse de refroidissement (2), lesquelles permettent un déplacement de la buse de refroidissement (2) exclusivement orthogonal à l'axe central (MA).

7. Dispositif selon la revendication 6, **caractérisé en ce que,** sur l'au moins une des mâchoires de guidage (17, 18), un élément de butée (19), limitant le déplacement de la buse de refroidissement (2), est monté.

8. Dispositif selon la revendication 7, **caractérisé en ce que** le logement (15) pour la buse de refroidissement (2) comporte un dispositif d'encliquetage (20) fixant la buse de refroidissement (2) en position de butée.

9. Procédé pour raccorder une buse de refroidissement (2) à une alimentation en lubrifiant de refroidissement pour une rectifieuse, dans lequel la buse de refroidissement (2) prend appui sur un logement (15) d'un boîtier (6) fixe et est bloquée en rotation, et ensuite une pièce tubulaire (10), fournie pour le passage du lubrifiant de refroidissement, guidée linéairement dans le boîtier (6) et bloquée en rotation, est pressée contre la buse de refroidissement (2) à l'aide d'une transmission rotative-linéaire (3) actionnée manuellement et agencée dans le boîtier (6).

10. Procédé selon la revendication 9, **caractérisé en ce que** la buse de refroidissement (2) est montée dans une configuration préréglée sur le boîtier (6) solidaire à la rectifieuse,dans lequel la transmission rotative-linéaire (3) est actionnée à l'aide d'un levier à main (5) pivotant sur moins de 180 ° et solidaire à un élément d'entraînement (4) de la transmission rotative-linéaire (3), et dans lequel le levier à main (5) reste relié à l'élément d'entraînement (4) lors du fonctionnement de la rectifieuse, notamment lors de l'acheminement du lubrifiant de refroidissement, lequel conserve ici une position constante exclusivement par friction, à savoir par conception autobloquante de la transmission rotative-linéaire (3).
